(19) Europäisches Patentamt / European Patent Office / Office européen des brevets

(11) **EP 4 435 463 A1**

(12) **EUROPEAN PATENT APPLICATION**

(43) Date of publication:
**25.09.2024 Bulletin 2024/39**

(21) Application number: **23382277.4**

(22) Date of filing: **24.03.2023**

(51) International Patent Classification (IPC):
**G01S 5/12** *(2006.01)*     **G01S 5/02** *(2010.01)*

(52) Cooperative Patent Classification (CPC):
**G01S 5/12; G01S 5/021;** B64U 2101/56;
G01S 3/74; G01S 2205/06; G08G 5/0069

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Fundació Privada I2cat, Internet i Innovació**
**Digital a Catalunya**
**08034 Barcelona (ES)**

(72) Inventors:
• **COSTA PÉREZ, Xavier**
  **08330 Premià de Mar (ES)**
• **REA, Maurizio**
  **20158 Milano (IT)**
• **DENISA BLAGA, Andra**
  **08860 Castelldefels (ES)**
• **CAMPOLO, Federico**
  **08004 Barcelona (ES)**

(74) Representative: **Torner, Juncosa I Associats, SL**
**C / Pau Claris, 108, 1r 1a**
**08009 Barcelona (ES)**

(54) **COMPUTER IMPLEMENTED METHOD, SYSTEM AND COMPUTER PROGRAMS FOR LOCATING A USER EQUIPMENT USING AN UNMANNED AERIAL VEHICLE**

(57) A computer implemented method, a system and computer programs for locating a user equipment using an unmanned aerial vehicle. The method comprises directing an UAV over a specified region of interest; estimating a distance and angles between at least one user equipment located around the specified region and the UAV by using a reference signal transmitted by the user equipment and the reference signal received by the UAV in a single time slot; computing an estimated position of the user equipment by defining a coordinate system using the estimated distance and angles; updating and correcting the computed estimated position of the user equipment using a machine learning algorithm, providing an updated and corrected position of the user equipment as a result; and defining a trajectory of the UAV including the vertical position around the user equipment by executing a prediction trajectory algorithm over the updated and corrected position of the user equipment.

**Fig. 1**

EP 4 435 463 A1

**Description**

Technical Field

The present invention generally relates to Unmanned Aerial Vehicles (UAVs). More specifically, the invention relates to a computer implemented method, to a system and to computer programs for tracking user equipment(s) using a UAV.

Background of the Invention

Every year millions of lives are lost in emergency situations. Finding missing people in the shortest possible time is the most effective tool to reduce such a death toll. However, this is challenging when victims are unable to communicate by themselves, located in large areas and/or difficult to reach. Time is one of the most important factors when it comes to saving lives in emergency situations. However, emergencies usually cannot be anticipated well in advance and thus are the most dangerous and difficult situations to handle in order to avoid having mortal victims. A first key step towards reducing the human lives toll in emergency situations is rapidly localizing victims. To do so, a common approach is relying on the Global Navigation Satellite System (GNSS). This satellite positioning system can localize a target with an accuracy of around 5 meters. GNSS relies on the exchange of information between visible satellites and User Equipment's (UEs), in order to allow the latter to compute their position from the pseudo-range measurements of the satellites. However, there are situations where satellites are either not visible from the target due to obstacles or users are not able to operate their devices or the communication infrastructure is down. Hence, the GNSS system might not be available to help localizing targets continuously and reliably in such situations. Moreover, the GNSS signal is affected by strong shadowing limitations if it gets attenuated by foliage, water, or other obstacles increasing its localization error. To address the aforementioned challenges UAVs, also known as Drones, are increasingly being used by first response agencies in disaster situations. Thanks to their portability, easy deployment and modularity, drone-based technology has proved being effective for finding missing people in large and/or difficult-to-reach locations. Moreover, on top of the usual computer vision and infrared usage in search-and-rescue operations, UAVs are increasingly being considered for deploying flying mobile Base Stations (BSs). Such solutions, enable victims with mobile phones to have access to connectivity if the network infrastructure is down and can help in passively locating people by finding them through their devices. Single-drone based cellular localization related work has focused on two-dimensional approaches while there are many situations where three dimensional localization solutions would be beneficial, e.g. targets covered by snow after an avalanche, by water after a flood, or by debris after an earthquake.

Some patents and patent applications are known in this field:

WO 2017019595-A1 is directed to techniques for using UAVs to provide cellular network communication coverage. Geolocations of multiple user devices in a geographical area that is serviced by an UAV network cell may be determined. Subsequently, operation condition data for the geographical area that affect at least one of UAV flight or UAV communication signal transmission or reception for the UAV network cell may be received. Accordingly, a flight trajectory that provides network coverage to one or more specific user devices in the geographical area may be generated based on the geolocations of the multiple user devices and the operation condition data. A control command is then sent to the UAV network cell to direct the UAV network cell to travel according to the flight trajectory.

WO 2017019595-A1 relates to an UAV that comprises a situational awareness system coupled to at least one onboard sensor that senses the location of other UAVs. A cooperative Radio Access Network (RAN)-signal processor is configured to process RAN signals in a UAV-User Equipment (UE) channel cooperatively with at least one other UAV to provide for increased rank of the UAV-UE channel and produce RAN performance criteria. A flight controller employs autonomous navigation control of the UAVs flight based on the relative spatial locations of other UAVs and the RAN performance criteria operating within predetermined boundaries of navigation criteria. The UAV can be configured to employ mitigation tactics against one or more UEs identified as a threat and may coordinate other UAVs to conduct such mitigations.

WO 2016145411-A1 discloses an automated drone security system for surveilling a location that includes one or more drones with onboard sensors and an imaging device for measuring surveillance data. The surveillance data may include images, telemetry data, infrared data, or other detectable information of the location. Drones may be capable of executing one or multiple flight operations as well as storing and transmitting the surveillance data to a server assembly operable for coordinating the drone and receiving the surveillance data. A drone dock may be included for drone launching, landing, and/or storing the drones. A user computing device may be in communication with the server assembly and the drone(s), the user computing device being capable of receiving user input and displaying surveillance data from the drone. Flight operations associated with surveilling the location may be automatically and/or manually controlled by the user computing device and/or or the server assembly in connection with the location.

Other solutions are also known by US11010837-B1, US 9696430-B2, US 11470484-B2, US 20200278689-A1, WO 2017116860-A1, and WO 2018053513-A1.

There are also known some scientific articles in this field.

SARDO [1], [2] is a 4G-LTE two-dimensional drone-based localization system able to localize missing people with an accuracy of few tens of meters. It exploits a pseudo-trilateration technique that relies on a single anchor and it estimates the location of each user within a time window of ~ 3 minutes. In contrast to this approach, present invention leverages on 5G-NR and considers a three-dimensional localization process. In particular, present invention keeps track of reference signals collected by an UAV to estimate both distance and direction of the user equipment. This allows localizing victims within a single frame, for example, within 10 ms.

GuideLoc [3] estimates the 2D location of multiple targets based on the combination of Received Signal Strength Indicator (RSSI) and Angle of Arrival (AoA) from a UAV. Due to the sensibility of RSSI to the environment, this method can produce inaccurate localization estimates. For this reason, present invention relies on an uplink reference signal from which the estimated distance and the estimated angles of each user from the UAV are extracted.

In [4], a deployment of multiple UAVs is considered. The drones are connected to each other through a cloud server which carries out the localization process to find missing people. In particular, the server uses a centralized algorithm called Layered Search-And-Rescue (LSAR) achieving an average effectiveness of approximately 74%. Present invention for localization in a disaster area considers a single UAV, since the distribution and coordination of multiple drones is more complex and costly.

The proposed approach in [5] localizes users exploiting only AoA information, being affected by the geometry of the environment. Present invention introduces different UE positions estimations, in order to correct the raw positioning and improve its accuracy to perform a more robust training for machine learning algorithms. Thus, a more reliable solution can be obtained.

Moreover, [6] introduces the concept of images for training a machine learning algorithm for the purpose of localization. In this case [6] exploits AoA images based on space-time measurement obtained through triangulation, exploiting then more than one BS. This allows the collection of more information about the channel and the training of the network with more images. As a result, this approach leads to less error in the positioning estimation. The scenario assumptions are thus different to present's invention solution, where a single portable BS (UAV) is considered.

[7] implements 3D Localization for SAR operations with multiple UAVs. It is based on the use of self-driving vehicles as a platoon which controls the UAVs located at different points of an emerging area. They are deployed in different places in order to collect the direction of arrival of the victims. Again, the scenario assumptions in this case significantly differ from present's invention approach.

Finally, [8] uses UAVs to track and locate people in indoor environments (mostly buildings) using multi-hop ad hoc Ultra Wide Band (UWB) connectivity and unconstrained optimization. They developed a real-time system capable of achieving 2.5 m of median accuracy. Conversely, present invention focuses on outdoor scenarios, achieving a median error of 1.1 m with a single UAV only.

**References**

[1] A. Albanese, V. Sciancalepore, and X. Costa-Perez, "Sardo: An automated search-and-rescue drone-based solution for victims localization," IEEE Transactions on Mobile Computing, p. 1-1, 2021. [Online]. Available: http://dx.doi.org/10.1109/TMC.2021.3051273

[2] Luke Dohrmel, ""Phone-seeking search-and-rescue drone is like Find My iPhone with wings"," Digital Trends, 2021, https://www.digitaltrends.com/features/search-rescue-drone-smartphonefinder/.

[3] A. Wang, X. Ji, D. Wu, X. Bai, N. Ding, J. Pang, S. Chen, X. Chen, and D. Fang, "Guideloc: Uav-assisted multitarget localization system for disaster rescue," Mobile Information Systems, vol. 2017, pp. 1-13, 03 2017.

[4] E. T. Alotaibi, S. S. Alqefari, and A. Koubaa, "Lsar: Multi-uav collaboration for search and rescue missions," IEEE Access, vol. 7, pp. 55 817-55 832, 2019.

[5] M. Z. Comiter, M. B. Grouse, and H. T. Kung, "A data-driven approach to localization for high frequency wireless mobile networks," in GLOBECOM 2017 - 2017 IEEE Global Communications Conference, 2017, pp. 1-7.

[6] M. Comiter and H. Kung, "Localization convolutional neural networks using angle of arrival images," 12 2018, pp. 1-7.

[7] H. Zhang, L. Wang, and A. Fei, "An integrated platoon and UAV system for 3D localization in search and rescue," in IEEE INFOCOM 2020 - IEEE Conference on Computer Communications Workshops (INFOCOM WKSHPS), 2020, pp. 144-149.

[8] A. Dhekne, A. Chakraborty, K. Sundaresan, and S. Rangarajan,"{TrackIO}: Tracking first responders {Inside-Out}," in 16th USENIX Symposium on Networked Systems Design and Implementation (NSDI 19), 2019, pp. 751-764.

[9] A. Chakraborty, E. Chai, K. Sundaresan, A. Khojastepour, and S. Rangarajan, "Skyran: A self-organizing lte ran in the sky," in Proceedings of the 14th International Conference on Emerging Networking Experiments and Technologies, ser. CoNEXT '18. New York, NY, USA: Association for Computing Machinery, 2018, p. 280-292. [Online]. Available: https://doi.org/10.1145/3281411.3281437

Description of the Invention

The object of the present invention is thus to provide a single-UAV/drone 3D cellular search and rescue solution that particularly leverages on 5G-NR and that is able to estimate the location of people through their mobile phones. The proposed solution allows improving the localization accuracy of state of the art systems.

This object is fulfilled by a method with the characteristics of claim 1, by a system with the features of claim 11, and by a computer program with the characteristics of claim 12.

To that end the present invention proposes, according to one aspect, a computer implemented method for locating a user equipment using an UAV. The method comprises directing the UAV over a specified region of interest; estimating the distance and the angle between at least one user equipment (or at least one cluster) located around the specified region of interest and the UAV, by using at least one known reference signal transmitted by the UE and the at least one reference signal received by the UAV in a single or multiple time slots; computing an estimated position of the UE by defining a coordinate system using the estimated distance and angle; updating and correcting the computed estimated position of the user equipment using one or more machine learning algorithms, providing an updated and corrected position of the user equipment as a result; and defining a trajectory of the UAV including the vertical position around the user equipment by executing a prediction trajectory algorithm over the updated and corrected position of the user equipment.

The reference signal(s) can comprise any of all the available reference signals: DeModulation Reference Signal (DMRS); a Phase Tracking Reference Signal (PTRS); a Sounding Reference Signal (SRS), a Channel State Information Reference Signal (CSI-RS); and/or combinations thereof.

In some embodiments, the distance is estimated by computing the Time of Flight (ToF) as the peak of the cross correlation function between the reference signal(s) transmitted by the UE and the reference signal(s) received by the UAV.

In some embodiments, the angles comprise the azimuth and elevation angles, which are estimated by building a channel state information (CSI) matrix by comparing the reference signal(s) transmitted by the user equipment and the reference signal(s) received by the UAV; and executing a 2D-multiple signal classification algorithm on the built CSI matrix.

In some embodiments, the reference signal(s) comprise(s) a data frame with a plurality of subframes, each subframe comprising a given time duration, the distance and angles between the user equipment and the UAV being estimated using a single subframe of the plurality of subframes or using a subset or all of the plurality of subframes.

In some embodiments, the coordinate system is defined on a three-dimensional map.

In some embodiments, one or more machine learning algorithms comprise one or more deep learning or neural networks or reinforcement learning techniques.

In some embodiments, the prediction trajectory algorithm comprises a two-dimensional area using the updated and corrected position of the user equipment; establishing a maximum and minimum altitude of the defined two-dimensional area in a three-dimensional space; computing, from the established maximum altitude, a future position of the UAV using a three-dimensional trajectory (e.g. a spiral) within the three-dimensional space taking into account a maximum distance that the UAV covers in a given time frame; and once the UAV has been directed and reached a limit of the defined two-dimensional area, further computing a new future position of the UAV based on a circular trajectory of the UAV within the defined two-dimensional area.

Particularly, in the present invention, the directing of the UAV over the specified region of interest is made according to a localization objective. This localization objective can be established following a decision-maker strategy that comprises selecting one or more of the following policies: a latency policy when the priority is locating the user equipment in the shortest possible time; an accuracy policy when the priority is finding the user equipment with the highest accuracy possible; a clustering policy when the objective is to optimize the accuracy in the shortest time possible.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Therefore, present invention allows obtaining the 3D user equipment positioning estimation through 5G-NR for single UAV-based first responder solutions. The invention enables to leverage on the information contained in an uplink reference signal to find the missing users positions through their mobile phones.

Brief Description of the Drawings

The previous and other advantages and features will be more fully understood from the following detailed description of embodiments, with reference to the attached figures, which must be considered in an illustrative and non-limiting manner, in which:

Fig. 1 graphically illustrates the proposed 3D localization framework for locating a user equipment using a single UAV, according to an embodiment of the present invention.

Fig. 2 illustrates the 3D Positioning error in meters for different radius $\rho$ of the UAV circular trajectory, with the UAV altitude h set to 100 m.

Fig. 3 shows three different UAV trajectories with the UE estimated positions (3A (h=100m and $\rho$=200m), 3B (h=50m and $\rho$=100m), 3C (h=20m and $\rho$=50m), and their normalized distributions of the 3D positioning error in meters (3D).

Detailed Description of the Invention and of Preferred Embodiments

Present invention proposes a 3D localization framework for locating user equipment (UE) using an UAV. Particularly, once an UAV has been directed over a specified region of interest, the method comprises i) the estimation of the distance and angles between the UE and the UAV; ii) the calculation of the UE estimated position; iii) the update and correction of the UE estimated position; and iv) the definition of a trajectory of the UAV around the UE.

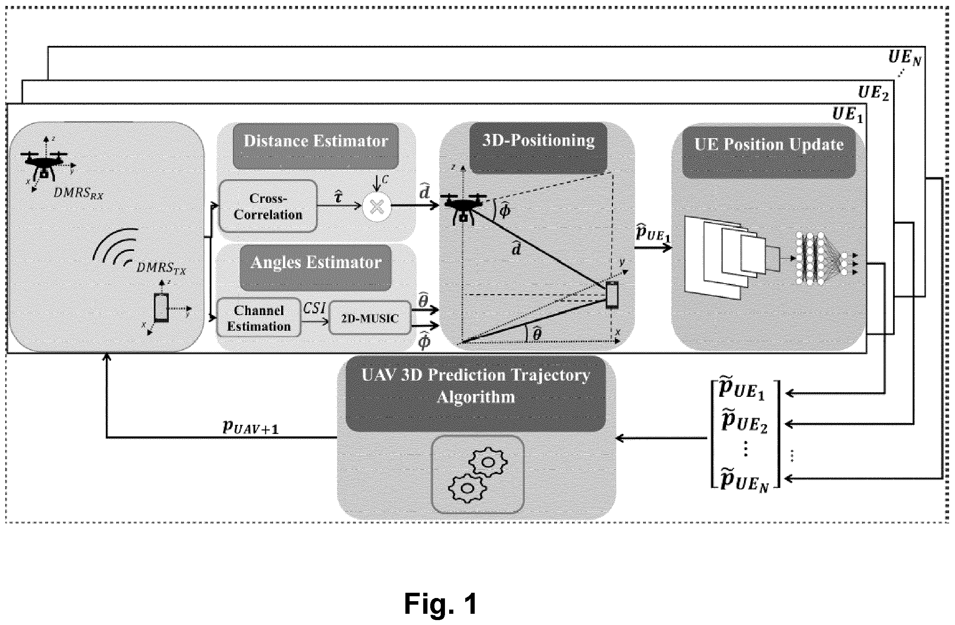

As shown in the first bottom block of Fig. 1, the proposed distance and angles estimators are retrieved by the same reference signal(s). In general, a reference signal is used by the network to increase protocol efficiency and keep transmissions contained within a slot or beam.

According to the present invention, the reference signal can comprise any of a DeModulation Reference Signal (DMRS); a Phase Tracking Reference Signal (PTRS); a Sounding Reference Signal (SRS), and/or a Channel State Information Reference Signal (CSI-RS).

In a particular embodiment, the DMRS is used since this DMRS can take advantage of its constant presence within each Orthogonal Frequency Division Multiplexing (OFDM) sequence, during the communication step, thus avoiding the allocation of localization-specific signals. Moreover, its early placement in the OFDM sequence also makes the DMRS ideal for latency-critical applications. Second, this reference signal is used for decoding the Physical Downlink/Uplink Shared Channel (PD/USCH), and so can be transmitted either in Downlink (DL) or in Uplink (UL). Finally, in high mobility scenarios, the DMRS transmission rate can be increased to track fast changes in the channel.

DMRS is generated starting from a particular type of sequence called Zadoff-Chu and being a reference signal, the transmitted DMRS ($DMRS_{Tx}$ in Fig. 1) is also known at the receiver. Hence, the DMRS in UL is used to estimate the distance and the AoA of the UE. The proposed method uses as input for the estimators the $DMRS_{Tx}$ transmitted by the UE and the $DMRS_{Rx}$ received by the UAV in a single slot.

- Distance Estimator:

In order to estimate the distance between the UE and the UAV, the Time of Flight (ToF) is calculated, which represents the time taken by a transmitted signal to reach the receiver. To avoid the complexity of perfect synchronization between transmitter and receiver, present invention uses the pair $DMRS_{Tx}$ and $DMRS_{Rx}$ as input for the ranging estimator. More specifically, present invention exploits the auto-correlation property of a reference signal, as proposed in [1, 9]. As the DMRS sequence belongs to the family of Constant Amplitude Zero Auto Correlation (CAZAC) sequences, the following zero autocorrelation property holds:

$$R_{xx}(m) = \sum_{n=0}^{N-1} z(n)\bar{z}(n+m) = \delta(m)$$

with z being the considered *ZC* sequence, $\bar{z}$ its complex conjugate and *m* the delay. Considering a transmitted and a received DMRS sequence in the time domain, respectively $rs_{Tx}$ and $rs_{Rx}$, and their counterparts in the frequency domain $RS_{Tx}$ and $RS_{Rx}$, the correlation property of the Fourier transform can be expressed as:

$$Corr(rs_{Tx}, rs_{Rx}) \iff RS_{Tx} \cdot \bar{RS}_{Rx}.$$

Therefore, exploiting the auto correlation property of ZC sequences, together with the correlation property of the Fourier transform, it is possible to calculate the circular cross-correlation between transmitted and received DMRS sequences. The estimated ToF between transmitter and receiver is then found by looking for the largest peak of the Inverse Discrete Fourier Transform (IDFT) of the circular cross correlation, as:

$$\hat{\tau} = max\{IDFT(RS_{Tx} \cdot \bar{RS}_{Rx})\}. \tag{1}$$

The distance from the UAV to the target device can be then computed as:

$$\hat{d} = \hat{\tau} \cdot c, \tag{2}$$

where c is the speed of signal propagation which is close to the speed of light in air.

- Angles Estimator:

In addition to the distance estimator, present invention also proposes an estimator for the azimuth and elevation angles of a UE. To do so, the transmitted and received reference signal (e.g. the DMRSs, among others) is used as input. The two sequences in the frequency domain are used to evaluate the channel and build the Channel State Information (CSI) matrix, necessary to estimate the angles of the signal. In particular, the CSI matrix is built by comparing the received and transmitted DMRS sequences. Therefore, relying again on the correlation property of the Fourier transform, the channel is simply estimated as:

$$CSI = \frac{RS_{Rx}}{RS_{Tx}}$$

Doing so, the collected CSI matrix contains one complex number per received antenna and per subcarrier. In order to then identify the strongest angles, starting from the CSI matrix, in a particular embodiment, the 2D-MUltiple Signal Classification (2D-MUSIC) algorithm is applied. The latter calculates the azimuth angle $\hat{\theta}$ and the elevation angle $\hat{\phi}$ of an unknown signal wavefront, exploiting the orthogonality property between signal and noise subspaces, computed with the decomposition of the received signal covariance matrix. More specifically, the angles are determined searching through the entire steering vector matrix and bringing out the steering vectors that are exactly orthogonal to each other:

$$\beta^{H}(\theta, \phi)Q_N = 0,$$

where $\beta$ is the steering vector at the angles $\theta$ and $\phi$, $(\cdot)^H$ denotes the Hermitian operation, and $Q_N$ represents the noise subspace. Based on the orthogonality between the steering vector and the eigenvectors of the noise subspace, the 2DMUSIC pseudospectrum is expressed as:

$$P_{2D-M} = \frac{1}{\beta^H(\theta, \phi) \cdot Q_N \cdot Q_N^H \cdot \beta(\theta, \phi)}$$

The azimuth and elevation angles are then estimated as:

$$(\hat{\theta}, \hat{\phi}) = \operatorname{argmin}\{\beta^H(\theta, \phi) Q_N Q_N^H \beta(\theta, \phi)\},$$

with $\theta$ and $\phi \in [-\frac{\pi}{2}, +\frac{\pi}{2}]$. Moreover, $\theta$ is defined between the x-axis and the projection of the wave direction onto the x-y plane, while $\phi$ is defined between z-axis and its orthogonal projection onto the x-y plane.

- 3D-Positioning:

Based on the distance and angles estimations, the method calculates the estimated location of the UE, following the framework in Fig. 1. In order to calculate the estimated UE position, present invention first defines a coordinate system on a three-dimensional map. Considering a single UAV system, let ($x_{UAV}$, $y_{UAV}$, $z_{UAV}$) be the coordinates of the current GNSS position of the UAV (e.g., GPS), $\hat{d}$ the estimate of the distance from UAV to UE, $\hat{\theta}$ and $\hat{\phi}$ the estimated directions (azimuth and elevation) between the UAV and the UE, according to Eq. (2) and (4), respectively. The coordinates of the estimated position are found as follows:

$$\hat{p}_{UE}(\hat{x}_{UE}, \hat{y}_{UE}, \hat{z}_{UE}) =$$
$$[x_{UAV} + \hat{d} \cdot cos\hat{\theta} \cdot cos\hat{\phi},$$
$$y_{UAV} + \hat{d} \cdot sin\hat{\theta} \cdot cos\hat{\phi},$$
$$z_{UAV} + \hat{d} \cdot sin\hat{\phi}].$$

- UE Position Update:

For updating and correcting the computed estimated position of the UE one or more machine learning techniques can be used, for example, deep learning techniques or neural networks. More specifically, present invention uses a Convolutional Neural Network (CNN). The method employs a 3D CNN, where the concept of fully connected kernels (or filters) is applied to correlate different types of data. 3D CNNs models are built stacking together several convolutional and maxpooling (or subsampling) layers. In particular, each convolutional layer extracts information from the input using a locally connected kernel that detects features in the input data.

For the training phase, several UAV and UE trajectories are simulated and a synthetic dataset mathematically expressed by a matrix $\Gamma$ of dimensions $L \times 6$ is generated. More specifically, for each fixed trajectory of the UAV, the UE location of coordinates ($x_{UE}$, $y_{UE}$, $z_{UE}$) is based on the Self-similar Least Action Walk (SLAW) algorithm that simulates realistic human mobility patterns. The matrix $\Gamma$ can be then expressed as:

$$\Gamma = \begin{bmatrix} \bar{x}_{UE}^{(1)} \ \bar{y}_{UE}^{(1)} \ \bar{z}_{UE}^{(1)} \ , x_{UAV}^{(1)} \ y_{UAV}^{(1)} \ z_{UAV}^{(1)} \\ \bar{x}_{UE}^{(2)} \ \bar{y}_{UE}^{(2)} \ \bar{z}_{UE}^{(2)} \ , x_{UAV}^{(2)} \ y_{UAV}^{(2)} \ z_{UAV}^{(2)} \\ \vdots \quad \vdots \quad \vdots \quad \vdots \quad \vdots \quad \vdots \\ \bar{x}_{UE}^{(L)} \ \bar{y}_{UE}^{(L)} \ \bar{z}_{UE}^{(L)} \ , x_{UAV}^{(L)} \ y_{UAV}^{(L)} \ z_{UAV}^{(L)} \end{bmatrix},$$

where $\forall l \in [1, L]$:

$$\bar{x}_{UE}^{(l)} = x_{UE} + k_x, k_x \in \mathcal{N}(\mu_x, \sigma_x)$$

$$\bar{y}_{UE}^{(l)} = y_{UE} + k_y, k_y \in \mathcal{N}(\mu_y, \sigma_y)$$

$$\bar{z}_{UE}^{(l)} = z_{UE} + k_z, k_z \in \mathcal{N}(\mu_z, \sigma_z),$$

and N indicates an additive Gaussian noise with mean $\mu$ and standard deviation $\sigma$, one for each dimension x-y-z. The values $\mu$ and $\sigma$ are set based on the obtained outcomes. During the training phase, the method aims at offering the network the matrix $\Gamma$ to regress the matrix of the 3D UE coordinates. The goal then is to obtain a final model M, able to update the UE estimated position $\hat{p}_{UE}$, correcting the latter as follows:

$$\tilde{p}_{UE}(\tilde{x}_{UE}, \tilde{y}_{UE}, \tilde{z}_{UE}) = \mathcal{M}(\hat{x}_{UE}, \hat{y}_{UE}, \hat{z}_{UE}).$$

- UAV 3D Trajectory

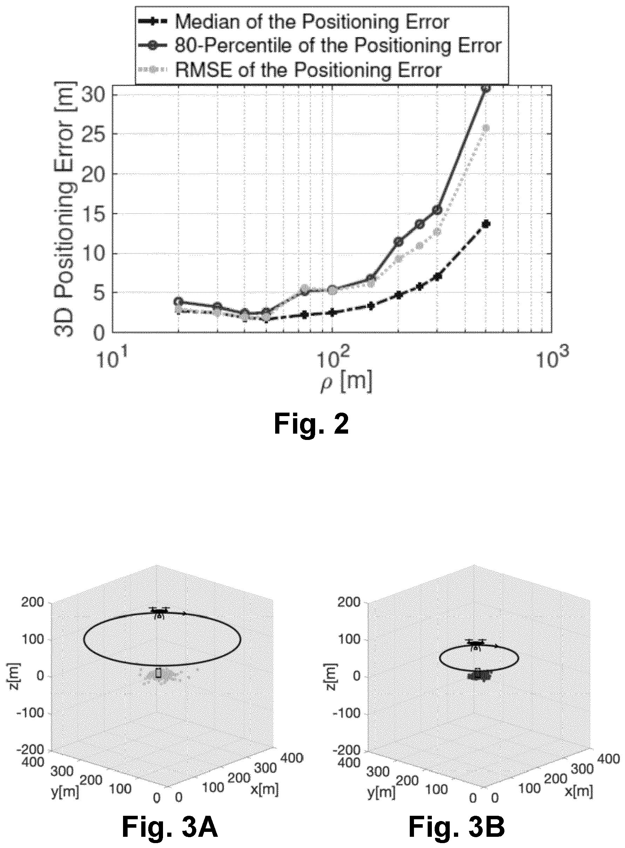

In the following it is shown how the proposed 3D positioning accuracy is affected by the distance between the UAV and the UEs to be tracked, and then, motivated by the results, an UAV 3D prediction trajectory algorithm is introduced. To do so, in an embodiment, MATLAB R2022a is used in order to create a simulated single UE scenario where the UAV carries four antennas deployed in a Uniform Rectangular Array (URA), while the UE carries an isotropic antenna. The UAV follows perfect circular trajectories centered on the evaluated region/area, with radius $\rho$, while the UE is considered static. In an embodiment, the UAV altitude h is set to 100 meters, and to be compliant with national regulations. The transmission of 300 5G-NR frames is simulated, setting the bandwidth to 100 MHz and the Resource Blocks equal to 273. Furthermore, an ideal static fading channel with a single path and without any reflection is considered. In each frame, the method calculates the estimated 3D position of the UE, according to the Eq. (5), and then evaluates the 3D positioning error. The latter is shown in Fig. 2 for different radius $\rho$ in meters (between 20 and 500) of the circular UAV trajectory. It can be observed that increasing the radius $\rho$, and so the distance between the UAV and the UE, the 3D positioning error is increased. In contrast, decreasing $\rho$ drastically reduces the obtained positioning error. The reason behind is that the method calculates the UE position estimate based on angular information ($\hat{\theta}$ and $\hat{\phi}$), as expressed in Eq. (5). For this reason, an occurred error on the angle estimation affects more the positioning estimation when the distance between the UAV and UE increases.

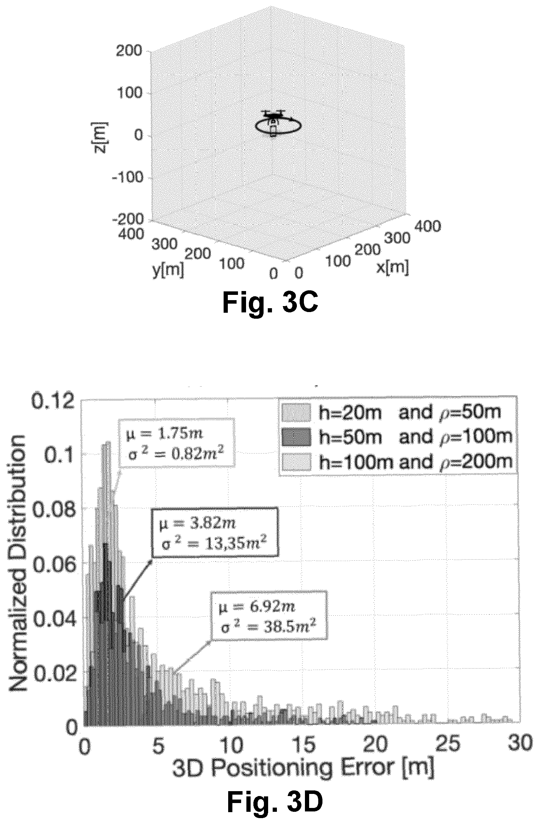

In addition to this analysis, present invention, in an embodiment, has also considered three different cases where the UAV also reduces its height, getting even closer to the UE. Fig. 3 shows three scenarios where the position of a static UE is estimated by the UAV that follows circular trajectories of different radius, having this time different altitude values. More specifically, in Fig. 3A the h and $\rho$ are set to 100 and 200 meters, while equal to 50 and 100 meters in Fig. 3B, and equal to 20 and 50 meters in Fig. 3C. In order to clearly quantify the obtained error over all 300 frames, in Fig. 3D the normalized distributions of the 3D positioning error in meters for the three cases is shown. It can be observed that by decreasing the height of the UAV the invention is able to decrease even more the overall error. More in detail, the distribution related to the points of Fig. 3A presents a mean $\mu$ and a variance $\sigma2$ equal to 6.92 m and 38.5 m2, respectively. For the points of Fig. 3B the invention obtained 3.82 m and 13.35 m2 of $\mu$ and $\sigma2$, while 1.75 m and 0.82 m2 for the points estimates represented in Fig. 3C.

The results of this investigation suggest the development of an approaching algorithm for a dynamic UAV trajectory in which the UAV reduces its distance from all the UEs within the emergency area.

- UAV 3D Prediction Trajectory Algorithm:

In the more general case, N is denoted as the total number of UEs located in an emergency area. Starting from Eq. (6), the generic 3D UE estimated position in a 5G-NR frame can be expressed as:

$$\tilde{p}_{\mathrm{UE}n} = [\tilde{x}_{\mathrm{UE}n}, \tilde{y}_{\mathrm{UE}n}, \tilde{z}_{\mathrm{UE}n}], n \in [1, N].$$

The UAV 3D prediction trajectory Algorithm first takes as input all the N estimated UE positions and then, for the sake of simplicity, it defines the emergency area as a 2D circle of center CDA and radius $\rho$DA, calculated as follows:

$$C_{\mathrm{DA}}(x_{\mathrm{DA}}, y_{\mathrm{DA}}) = \left[ \sum_{n=1}^{N} \frac{\tilde{x}_{\mathrm{UE}_n}}{N}, \sum_{n=1}^{N} \frac{\tilde{y}_{\mathrm{UE}_n}}{N} \right]$$

$$\rho_{\mathrm{DA}} = \max_{n=1}^{N} \left\{ \sqrt{(\tilde{x}_{\mathrm{UE}_n} - x_{\mathrm{DA}})^2 + (\tilde{y}_{\mathrm{UE}_n} - y_{\mathrm{DA}})^2} \right\}.$$

In the 3D space, the altitude of the emergency area is set to $z_{\mathrm{DA}} = \max_{i=1}^{N} \tilde{z}_{\mathrm{UE}_i}$. This defined area represents the limit that the UAV may reach. In fact, the UAV starts from an unknown initial position of a given height (e.g. 100 m) and then, frame by frame, it moves with a speed $v_{\mathrm{UAV}}$ closer to the UEs, reaching thus the emergency area. More specifically, in an embodiment, the algorithm calculates the future UAV position $p_{\mathrm{UAV}+1}$ according to a three-dimensional trajectory, for example, a 3D spiral equation, of variable radius $\rho_s$, taking into account the maximum distance $\delta_{\mathrm{sMAX}}$ in meters that the UAV covers in a $T_{\mathrm{FRAME}}$ equal to 10 ms, for example. Once the UAV reaches the limit of the emergency area in the x-y plane, it further decreases its altitude to reach also $z_{\mathrm{DA}}$ (if not done yet). At this point, the algorithm calculates the position $p_{\mathrm{UAV}+1}$, based on the circular UAV trajectory centered in CDA and having radius $\rho_{\mathrm{DA}}$. Doing so, the UAV is able to get close to all UEs, keeping all of them within the emergency area.

Following, an example of the UAV 3D prediction trajectory algorithm is illustrated.

---

**Algorithm** UAV 3D Prediction Trajectory

---

**Input:** $[\tilde{p}_{\text{UE}_1}, \tilde{p}_{\text{UE}_2}, ..., \tilde{p}_{\text{UE}_N}]$, $p_{\text{UAV}}(x_{\text{UAV}}, y_{\text{UAV}}, z_{\text{UAV}})$, $v_{\text{UAV}}$

**Output:** $p_{\text{UAV}+1}$

$x_{\text{DA}} = \sum_{n=1}^{N} \frac{\tilde{x}_{\text{UE}_n}}{N}, y_{\text{DA}} = \sum_{n=1}^{N} \frac{\tilde{y}_{\text{UE}_n}}{N}, z_{\text{DA}} = \max_{n=1}^{N} \tilde{z}_{\text{UE}_n}$

$\rho_{\text{DA}} = \max_{n=1}^{N} \{ \sqrt{(\tilde{x}_{\text{UE}_n} - x_{\text{DA}})^2 + (\tilde{y}_{\text{UE}_n} - y_{\text{DA}})^2} \}$

$\delta_{s_{\text{MAX}}} = v_{\text{UAV}} \cdot T_{\text{FRAME}}$

$\rho_s = \sqrt{|x_{\text{UAV}} - x_{\text{DA}}|^2 + |y_{\text{UAV}} - y_{\text{DA}}|^2}$

$\mathbb{X} = \{x_{\text{UAV}} + r \cdot \cos \alpha + \alpha_0\}, \mathbb{Y} = \{y_{\text{UAV}} + r \cdot \sin \alpha + \alpha_0\}$,

  with $r \in [0, \rho_s], \alpha \in [0, 2\pi]$ and $\alpha_0 = \arctan(\frac{y_{\text{UAV}} - y_{\text{DA}}}{x_{\text{UAV}} - x_{\text{DA}}})$

$\mathbb{Z} = \{z_{\text{UAV}} - z_0\}$, with $z_0 \in [0, \delta_{s_{\text{MAX}}}]$

Select $\bar{x} \in \mathbb{X}, \bar{y} \in \mathbb{Y}$ and $\bar{z} \in \mathbb{Z} \|$

  $\sqrt{(\bar{x} - x_{\text{UAV}})^2 + (\bar{y} - y_{\text{UAV}})^2 + (\bar{z} - z_{\text{UAV}})^2} = \delta_{s_{\text{MAX}}}$

**if** $\bar{z} < z_{DA}$ **then**

  $\bar{z} = z_{\text{DA}}$

**if** $\bar{P}(\bar{x}, \bar{y})$ *is within the circle of center* $C_{DA}(x_{DA}, y_{DA})$ *and*

*radius* $\rho_{DA}$ **then**

  $\mathbb{X}' = \{x_{\text{DA}} + \rho_{\text{DA}} \cdot \cos \alpha\}, \mathbb{Y}' = \{y_{\text{DA}} + \rho_{\text{DA}} \cdot \sin \alpha\}$

  Select $\bar{x} \in \mathbb{X}', y' \in \mathbb{Y}$ and $\bar{z} \in \mathbb{Z} \|$

    $\sqrt{(\bar{x} - x_{\text{UAV}})^2 + (\bar{y} - y_{\text{UAV}})^2 + (\bar{z} - z_{\text{UAV}})^2} = \delta_{s_{\text{MAX}}}$

$p_{\text{UAV}+1} = [\bar{x}, \bar{y}, \bar{z}]$

---

In some embodiments, the directing of the UAV towards the specified region of interest is done following a localization objective/plan. This localization objective/plan used for directing the UAV to the region of interest (i.e. the disaster/emergency area) can be based on multiple policies, which can trade-off localization accuracy versus speed. More particularly, present invention considers the following three different policies: 1) Latency: when the priority is finding the users in the shortest possible time. 2) Accuracy: when the priority is finding the users with the highest accuracy possible. 3) ε-Clustering: when the objective is to optimize the accuracy in the shortest time possible.

Once the desired policy is selected, the UEs can be grouped together in a set of Nc clusters. The idea behind is that the UAV, during a fixed time window of duration $T_w$, can focus on all desired clusters separately. If the selected priority is time, then all users are grouped together in a single cluster (Nc=1); in such a way, their estimated positions are available during the whole $T_w$. If the policy requires accuracy, each user is grouped in a cluster, allowing the UAV to focus on a single cluster at a time, to achieve the maximum accuracy possible. In this case, as time is not a priority anymore, the estimations are available only during a period of $T_w = N_c$, where $N_c$ is equal to $N_{\text{TOT}}$, the total number of UEs within the disaster area. In the third case, where the present invention tries to achieve the best compromise between the total tracking time and the obtained accuracy, it is proposed to apply a clustering algorithm that automatically estimates the best number of clusters Nc. Therefore, a generic cluster $C_k$ contains a number of UEs equal to $N^{(k)}_{\text{UE}}$, with $k = 1,...,Nc$. To do so, the UAV first flies around the disaster area that is defined at the beginning of the deployment, and is large enough to comprehend all missing users. The UAV then collects a set of all UE position estimations, in order to finally apply the clustering algorithm such as K-means, Gaussian mixture, DBSCAN, etc.

Various aspects of the proposed method, as described herein, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors, or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another, for example, from a management server or host computer of a scheduling system into the hardware platform(s) of a computing environment or other system implementing a computing environment or similar functionalities in connection with image processing. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, image processing as disclosed herein may be implemented as a firmware, firmware/software combination, firmware/hardware combination, or a hardware/firmware/software combination.

The scope of the present invention is defined in the following set of claims.

**Claims**

1.  A computer implemented method for locating a user equipment using an unmanned aerial vehicle, the method comprising:

    directing an unmanned aerial vehicle, UAV, over a specified region of interest;
    estimating a distance and angles between at least one user equipment located around the specified region of interest and the UAV by using at least one reference signal transmitted by the user equipment and the at least one reference signal received by the UAV in a single or multiple time slots;
    computing an estimated position of the user equipment by defining a coordinate system using the estimated distance and angles;
    updating and correcting the computed estimated position of the user equipment using one or more machine learning algorithms, providing an updated and corrected position of the user equipment as a result; and
    defining a trajectory of the UAV including a vertical position around the user equipment by executing a prediction trajectory algorithm over the updated and corrected position of the user equipment.

2.  The method of claim 1, wherein the at least one reference signal comprises a DeModulation Reference Signal, DMRS; a Phase Tracking Reference Signal, PTRS; a Sounding Reference Signal, SRS, and/or a Channel State Information Reference Signal, CSI-RS.

3.  The method of claim 1 or 2, wherein the distance is estimated by computing one or more autocorrelation functions of the reference signal(s) and by computing the time of flight, ToF, taken by the reference signal(s) transmitted by the user equipment to reach the UAV using the computed autocorrelation function(s).

4.  The method of any one of the previous claims, wherein the angles comprise the azimuth and elevation angles, which are estimated by:

    building a channel state information, CSI, matrix by comparing the reference signal(s) transmitted by the user equipment and the reference signal(s) received by the UAV; and
    executing a 2D-multiple signal classification algorithm on the built CSI matrix.

5.  The method of any one of the previous claims, wherein the reference signal(s) comprise(s) a data frame with a plurality of subframes, each subframe comprising a given time duration, the distance and angles between the user equipment and the UAV being estimated using a single subframe of the plurality of subframes or using a subset or all of the plurality of subframes.

6.  The method of any one of the previous claims, wherein the coordinate system is defined on a three-dimensional map.

7.  The method of any one of the previous claims, wherein the one or more machine learning algorithms comprise one or more deep learning or neural networks or reinforcement learning techniques.

8. The method of any one of the previous claims, wherein the prediction trajectory algorithm comprises:

defining a two-dimensional area using the updated and corrected position of the user equipment;
establishing a maximum and minimum altitude of the defined two-dimensional area in a three-dimensional space;
computing, from the established maximum altitude, a future position of the UAV using a three-dimensional trajectory within the three-dimensional space taking into account a maximum distance that the UAV covers in a given time frame; and
once the UAV has been directed and reached a limit of the defined two-dimensional area, further computing a new future position of the UAV based on a circular trajectory of the UAV within the defined two-dimensional area.

9. The method of any one of the previous claims, further comprising directing the UAV over the specified region of interest according to a localization objective.

10. The method of claim 9, wherein the localization objective is established following a decision-maker strategy that comprises selecting one or more of the following policies:

a latency policy when the priority is locating the user equipment in the shortest possible time;
an accuracy policy when the priority is finding the user equipment with the highest accuracy possible;
a clustering policy when the objective is to optimize the accuracy in the shortest time possible.

11. A system for locating a user equipment using an unmanned aerial vehicle, comprising:

an unmanned aerial vehicle; and
a memory and one or more processors, the memory having instructions stored therein, the instructions, when executed by the one or more processors, cause the one or more processors to:

direct an unmanned aerial vehicle, UAV, over a specified region of interest;
estimate a distance and angles between at least one user equipment located around the specified region of interest and the UAV by using at least one reference signal transmitted by the user equipment and the at least one reference signal received by the UAV in a single or multiple time slots;
compute an estimated position of the user equipment by defining a coordinate system using the estimated distance and angles;
update and correct the computed estimated position of the user equipment using one or more machine learning algorithms, providing an updated and corrected position of the user equipment as a result; and
define a trajectory of the UAV in a vertical position around the user equipment by executing a prediction trajectory algorithm over the updated and corrected position of the user equipment.

12. A non-transitory computer-readable medium storing computer-executable instructions that upon execution cause one or more processors to:

direct an unmanned aerial vehicle, UAV, over a specified region of interest;
estimate a distance and angles between at least one user equipment located around the specified region of interest and the UAV by using at least one reference signal transmitted by the user equipment and the at least one reference signal received by the UAV in a single time slot or multiple time slots;
compute an estimated position of the user equipment by defining a coordinate system using the estimated distance and angles;
update and correct the computed estimated position of the user equipment using one or more machine learning algorithms, providing an updated and corrected position of the user equipment as a result; and
define a trajectory of the UAV in a vertical position around the user equipment by executing a prediction trajectory algorithm over the updated and corrected position of the user equipment.

**Fig. 1**

EP 4 435 463 A1

**Fig. 2**

**Fig. 3A**

**Fig. 3B**

Fig. 3C

Fig. 3D

**EP 4 435 463 A1**

Europäisches Patentamt
European Patent Office
Office européen des brevets

# EUROPEAN SEARCH REPORT

Application Number

EP 23 38 2277

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | A. WANGX. JID. WUX. BAIN. DINGJ. PANGS. CHENX. CHEND. FANG: "Guideloc: Uav-assisted multitarget localization system for disaster rescue", MOBILE INFORMATION SYSTEMS, vol. 2017, March 2017 (2017-03), pages 1-13, XP93079529, * sections: 1. Introduction; 2. Background; 3. Overview; 4. Region Division; 6. Single Target Localization. * | 1-12 | INV. G01S5/12 G01S5/02 |
| X | US 2020/241104 A1 (SCHIFFMILLER RICHARD [US]) 30 July 2020 (2020-07-30) * figures 1, 7 * * paragraphs [0015] - [0017], [0036] - [0065] * | 1-12 | |
| A | ALBANESE ANTONIO ET AL: "SARDO: An Automated Search-and-Rescue Drone-Based Solution for Victims Localization", IEEE TRANSACTIONS ON MOBILE COMPUTING, IEEE SERVICE CENTER, LOS ALAMITOS, CA, US, vol. 21, no. 9, 13 January 2021 (2021-01-13), pages 3312-3325, XP011916293, ISSN: 1536-1233, DOI: 10.1109/TMC.2021.3051273 [retrieved on 2021-01-13] * figure 2 * * sections: 3 Geo-localization Model; 5 Dynamic UAV Relocation; 6 SARDO Implementation. * | 2,3,8 | TECHNICAL FIELDS SEARCHED (IPC) G01S B64C G08G B64U |

The present search report has been drawn up for all claims

| Place of search | Date of completion of the search | Examiner |
|---|---|---|
| Munich | 8 September 2023 | Tancredi, Urbano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 38 2277

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2023

| Patent document cited in search report | | Publication date | Patent family member(s) | | Publication date |
|---|---|---|---|---|---|
| US 2020241104 | A1 | 30-07-2020 | US | 2020241104 A1 | 30-07-2020 |
| | | | WO | 2020154377 A1 | 30-07-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017019595 A1
- WO 2016145411 A1
- US 11010837 B1
- US 9696430 B2
- US 11470484 B2
- US 20200278689 A1
- WO 2017116860 A1
- WO 2018053513 A1

### Non-patent literature cited in the description

- **A. ALBANESE ; V. SCIANCALEPORE ; X. COSTA-PEREZ.** Sardo: An automated search-and-rescue drone-based solution for victims localization. *IEEE Transactions on Mobile Computing,* 2021, 1-1, http://dx.doi.org/10.1109/TMC.2021.3051273
- **LUKE DOHRMEL.** Phone-seeking search-and-rescue drone is like Find My iPhone with wings. *Digital Trends,* 2021, https://www.digitaltrends.com/features/search-rescue-drone-smartphonefinder/
- **A. WANG ; X. JI ; D. WU ; X. BAI ; N. DING ; J. PANG ; S. CHEN ; X. CHEN ; D. FANG.** Guideloc: Uav-assisted multitarget localization system for disaster rescue. *Mobile Information Systems,* March 2017, vol. 2017, 1-13
- **E. T. ALOTAIBI ; S. S. ALQEFARI ; A. KOUBAA.** Lsar: Multi-uav collaboration for search and rescue missions. *IEEE Access,* 2019, vol. 7, 55 817-55 832
- **M. Z. COMITER ; M. B. GROUSE ; H. T. KUNG.** A data-driven approach to localization for high frequency wireless mobile networks. *GLOBECOM 2017 - 2017 IEEE Global Communications Conference,* 2017, 1-7
- **M. COMITER ; H. KUNG.** *Localization convolutional neural networks using angle of arrival images,* 2018, vol. 12, 1-7
- **H. ZHANG ; L. WANG ; A. FEI.** An integrated platoon and UAV system for 3D localization in search and rescue. *IEEE INFOCOM 2020 - IEEE Conference on Computer Communications Workshops (INFOCOM WKSHPS),* 2020, 144-149
- **A. DHEKNE ; A. CHAKRABORTY ; K. SUNDARESAN ; S. RANGARAJAN.** TrackIO}: Tracking first responders {Inside-Out. *16th USENIX Symposium on Networked Systems Design and Implementation (NSDI 19),* 2019, 751-764
- Skyran: A self-organizing lte ran in the sky. **A. CHAKRABORTY ; E. CHAI ; K. SUNDARESAN ; A. KHOJASTEPOUR ; S. RANGARAJAN.** Proceedings of the 14th International Conference on Emerging Networking Experiments and Technologies, ser. CoNEXT '18. Association for Computing Machinery, 2018, 280-292